# EUROPEAN PATENT APPLICATION

(11) **EP 4 589 300 A1**
(43) Date of publication of application: **23.07.2025**
(21) Application number: 23864143.5
(22) Date of filing: 20.07.2023
(51) Int. Cl.: G01N 35/00, G01N 35/02

(54) **AUTOMATIC ANALYSIS DEVICE**

(30) Priority: 13.09.2022 JP 2022145151
(71) Applicant: HITACHI HIGH-TECH CORPORATION, Tokyo 105-6409 (JP)
(72) Inventor: INAGAKI Erika, Tokyo 105-6409 (JP); YAGI Kenichi, Tokyo 105-6409 (JP); ITO Kenta, Tokyo 105-6409 (JP)
(74) Representative: Strehl & Partner mbB
(86) International application number: PCT/JP2023/026698
(87) International publication number: WO 2024/057718

(57) **Abstract**

For a sample transported into an automatic analyzer, the presence or absence of an abnormality and the cause of an abnormality can be known at a glance. The automatic analyzer includes: an analyzing unit 101 that makes a measurement of a sample contained in a sample tube 105; a display unit 104 that displays a result of measurement by the analyzing unit; a transport unit 107 that transports the sample tube to the analyzing unit; and a camera 108 that takes an image of the sample tube transported to the analyzing unit. The image of the sample tube which has been taken by the camera is analyzed and, regarding the sample for which the measurement result is displayed, the display unit additionally displays one or more icons based on the analysis result of the image of the sample tube containing the sample.

## Description

### Technical Field

The present invention relates to an automatic analyzer that performs qualitative and quantitative analysis on biological specimens such as serum and urine (hereinafter referred to as "samples").

### Background Art

JP2020-173101A (PTL1) discloses a technique in which an image of a tube containing a sample is captured from above to analyze the status of the sample through image analysis. JP2020-173101A also describes a method for displaying an analyzed image in addition to the technique of image analysis.

JP2017-146281A (PTL2) discloses a technique in which an image of a transparent tube containing a sample is captured from a side and the status of the sample is analyzed through image analysis. JP2017-146281A describes checking the analyzed status of the sample on the same screen for measurement results.

### Citation List

### Patent Literature

PTL 1: JP2020-173101A
PTL 2: JP2017-146281A

### Summary of Invention

### Technical Problem

In an automatic analyzer such as an automatic biochemical analyzer or an automatic immunological analyzer, when a rack on which a sample tube containing a sample is loaded is transported into the analyzer, it is difficult to check the status of the sample from the outside of the analyzer. Particularly, in the case of a large-scale apparatus connected to a sample pre-processing apparatus, such as a centrifuge, via a sample transport apparatus, a user cannot check the status of the sample for a long time after loading the sample tube containing the sample in the automatic analyzer. Thus, by capturing an image of the sample tube during transport of the sample tube and displaying information obtained by analyzing the status of the sample based on the image of the sample tube on the screen, the user can ascertain the status of the sample to some degree even while the sample is inside the apparatus.

Although JP2020-173101A and JP2017-146281A describe capturing an image of the sample tube and analyzing the status of the sample, a method of transmitting the analysis result to the user is also important. The captured image itself includes a lot of information that is unnecessary for the user. For this reason, the user needs to be selective about the information in order to ascertain the information that the user wishes to check from the image. On the other hand, if analyzed results are displayed as text information, attention needs to be paid to a display screen to read the text, which may require efforts to check the information.

### Solution to Problem

An automatic analyzer according to an embodiment of the invention includes an analyzing unit that makes a measurement of a sample contained in a sample tube; a display unit that displays a result of measurement by the analyzing unit; a transport unit that transports the sample tube to the analyzing unit; a camera that takes an image of the sample tube transported to the analyzing unit; and a control unit that analyzes the image of the sample tube taken by the camera and, regarding the sample for which the measurement result is displayed, makes the display unit additionally display one or more icons based on an analysis result of the image of the sample tube containing the sample.

### Advantageous Effects of Invention

By checking status information of a sample transported into the automatic analyzer with an icon, the presence or absence of an abnormality and the cause of the abnormality can be ascertained at a glance. Other objects and new features will be apparent from the description of the present specification and accompanying drawings.

### Brief Description of Drawings

[Fig. 1] Fig. 1 is a schematic configuration diagram of an automatic analyzer.
[Fig. 2] Fig. 2 is a top view of an analyzing unit.
[Fig. 3] Fig. 3 is an example of a measurement result display screen.
[Fig. 4] Fig. 4 shows an example of icons.
[Fig. 5] Fig. 5 is a flowchart for selecting an icon representing the amount of a sample.
[Fig. 6] Fig. 6 is a table showing the correspondence between the sample statuses and the displayed icons.
[Fig. 7] Fig. 7 is another example of the measurement result display screen.
[Fig. 8] Fig. 8 is an example of an icon selection screen.
[Fig. 9] Fig. 9 is an example of icons.
[Fig. 10] Fig. 10 is an example of a raw data display screen.

### Description of Embodiments

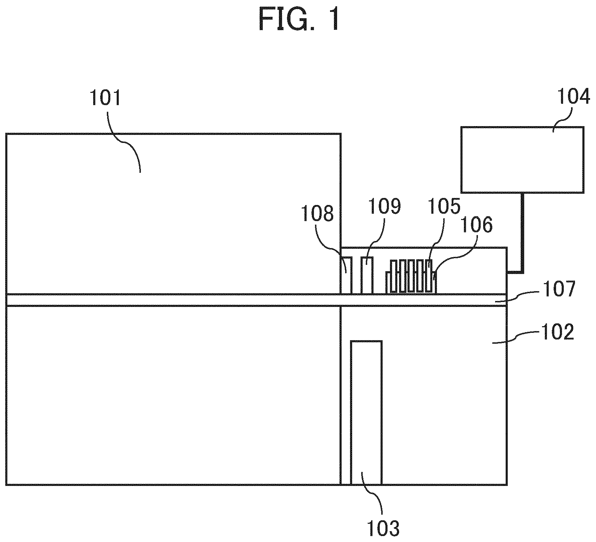

Fig. 1 illustrates a schematic configuration of an automatic analyzer according to the present embodiment. The automatic analyzer includes an analyzing unit 101 that measures a sample, a control unit 102 that receives input of the sample and performs analysis based on the result of the measurement from the analyzing unit 101, a computer 103 that performs control of the control unit 102 and information processing such as image analysis, a display unit 104, a transport unit 107 that transports a rack 106 on which sample tubes 105 containing the samples are loaded from the control unit 102 to the analyzing unit 101, a camera 108 that captures an image of the sample tubes 105, and a barcode reader 109 that identifies the rack and the sample tubes. Note that the control unit 102 and the computer 103 may be collectively referred to as a control unit.

The configuration of the automatic analyzer illustrated in Fig. 1 is merely an example, and the analyzer may be a multiple-module automatic analyzer including multiple analyzing units 101, or an apparatus connected to an additional transport unit for automatically transporting the rack 106 from the apparatus that pre-processes samples. In addition, the number of sample tubes 105 that can be loaded on the rack 106 does not matter. In addition, although an example in which barcodes are used to identify the rack and sample tubes is assumed here, when an identifying means other than barcodes is used to identify the rack and sample tubes, a reading apparatus that supports the identification means is included.

The flow of transporting a sample to the analyzing unit 101 in the automatic analyzer is as follows. A user installs, in the control unit 102, the rack 106 on which the sample tubes 105 containing samples to be analyzed have been loaded, and selects, from the display unit 104, an analysis item requested for the samples. Here, although a monitor that is available for touch-panel operations is assumed as the display unit 104, the display unit may adopt the configuration in which it is operated with a mouse connected to the computer 103.

When the user instructs a start of analysis, the transport unit 107 transports the rack 106 to the analyzing unit 101. When the rack 106 passes in front of the camera 108, the transport unit 107 temporarily stops transport of the rack 106, and the camera 108 captures an image of each of the sample tubes 105 loaded on the rack 106. The control unit 102 links the image of the sample tubes 105 captured by the camera 108 to the identification information read by the barcode reader 109 to associate sample information with image information.

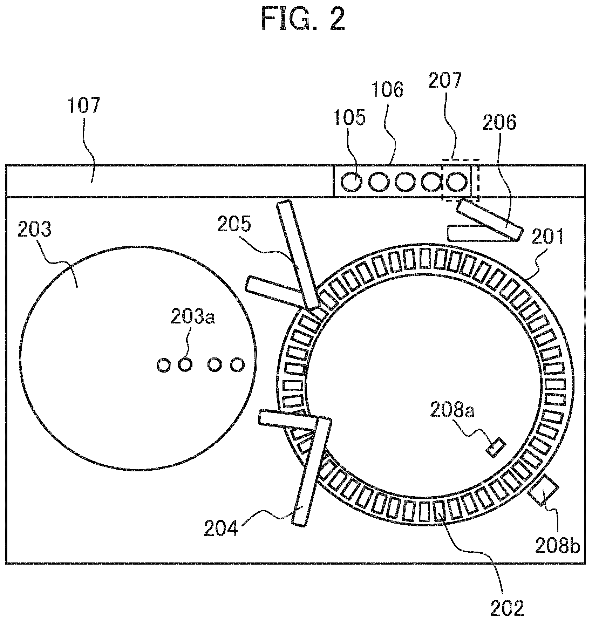

Fig. 2 illustrates a top view of the analyzing unit 101. The analyzing unit 101 is an apparatus in which samples and reagents are dispensed into multiple reaction containers 202 to react with one another, thereby measuring the reacted liquid, and includes a reaction disk 201, a reagent disk 203, a first reagent dispensing mechanism 204, a second reagent dispensing mechanism 205, a sample dispensing mechanism 206, a light source 208a, and a spectrophotometer 208b. Fig. 2 simply illustrates the principal configuration of the analyzing unit 101, and in addition to that, a cleaning mechanism that cleans the reaction containers 202, an agitating mechanism that agitates the samples and reagents to react with one another, a cleaning tub for cleaning probes attached to the dispensing mechanism, and the like are included.

The reaction disk 201 has the reaction containers 202 arranged on its circumference, constantly rotates at a fixed angle during analysis, and moves the reaction containers 202 to various positions such as a sample dispensing position, a reagent dispensing position, and a photometric position using the rotation.

The transport unit 107 that transports the rack 106 on which the sample tubes 105 containing samples are loaded is installed near the reaction disk 201. The sample dispensing mechanism 206 that can rotate and move vertically is installed between the reaction disk 201 and the transport unit 107. The sample dispensing mechanism 206 moves in an arc around the rotation axis, and dispenses the samples from the sample tubes 105 to the reaction containers 202.

The reagent disk 203 can have multiple reagent tubes containing reagents, which will be used in analysis, loaded on its circumference, and rotation of the reagent disk 203 causes any reagent to move to a reagent aspirating position. The reagent disk 203 is covered with a cover to keep the reagent tubes cool. Thus, the cover is provided with aspiration holes 203a through which the first reagent dispensing mechanism 204 and the second reagent dispensing mechanism 205 access the reagent tubes to dispense the reagents from the reagent tubes to the reaction containers 202. Note that the reagent disk 203 does not need to be a rotating type, and may be a type of allowing the first reagent dispensing mechanism 204 and the second reagent dispensing mechanism 205 to freely access the arranged reagent tubes.

The flow of a sample measurement process in the analyzing unit 101 is as follows. First, the sample dispensing mechanism 206 dispenses the samples contained in the sample tubes 105 loaded on the rack 106 transported to a sample aspirating position 207 by the transport unit 107 to the reaction containers 202 on the reaction disk 201. In the case of an automatic biochemical analyzer, probes attached to the sample dispensing mechanism 206 are not disposable, but are cleaned in the cleaning tub for reuse. The sample dispensing mechanism 206 detects a liquid level using a liquid level detecting sensor and performs aspiration at a position close to the liquid level to minimize the area of the probes coming in contact with the samples.

When the sample is discharged into the reaction containers 202, the first reagent dispensing mechanism 204 dispenses a first reagent to be used in analysis from the reagent tubes on the reagent disk 203 after a certain period of time. Successively, the agitating mechanism agitates the mixed liquid of the sample and reagent in the reaction containers 202. After the certain period of time elapses, the second reagent dispensing mechanism 205 dispenses, if necessary, a second reagent and a third reagent into the reaction containers 202 into which the first reagent has been dispensed from the reagent tubes on the reagent disk 203.

Then, the light intensity measured by the spectrophotometer 208b is transmitted to the control unit 102 via an A/D converter and an interface. Then, the control unit 102 performs an arithmetic operation to obtain the concentration of a predetermined component contained in the liquid sample such as blood or urine, and causes the display unit 104 to display the result.

Here, a biochemical analyzer is exemplified as the analyzing unit 101. The analyzing unit 101 may be an immunology analyzer, an electrolyte analyzer, a mass spectrometer, or the like.

In the present embodiment, the display unit 104 displays the status of the sample using an icon. The status of the sample can be ascertained from the computer 103 analyzing the image of the sample tubes 105 captured by the camera 108. It does not matter whether the image of the sample tubes 105 is captured from the side or from above. The status of the sample is information particularly important for the user out of the information obtained by analyzing the image of the sample tubes 105. Thus, an example will be provided in which image analysis is performed to extract information about the amount, color, and presence or absence of froth of the samples from the captured image of the sample tubes 105 and the result of the extraction is displayed in an icon on the display unit 104.

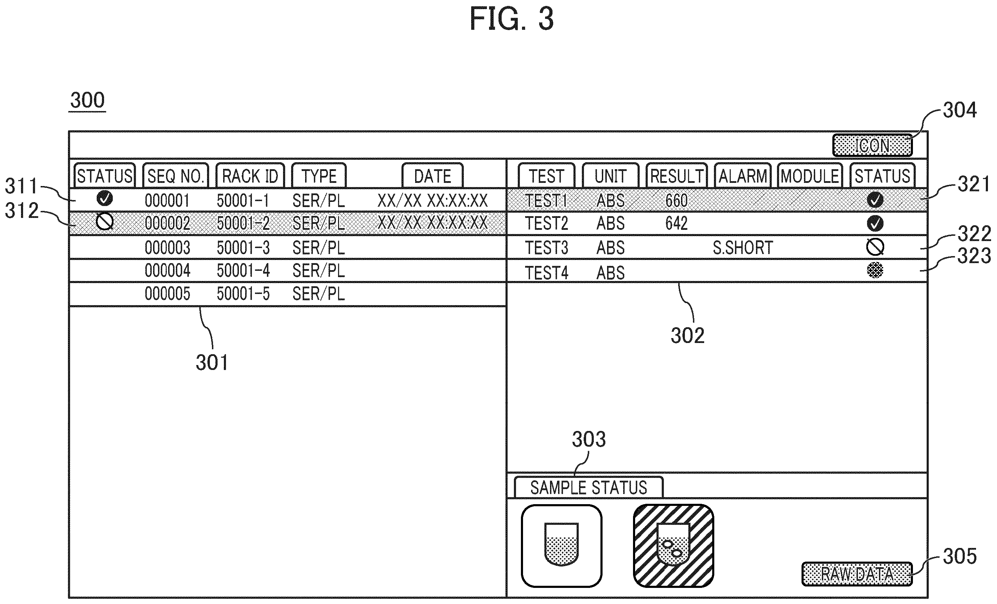

Fig. 3 is an example of a measurement result display screen. A measurement result display screen 300 displays sample information 301 of the samples contained in the sample tubes 105 on the left side of the screen. The sample information 301 includes status (Status), sample number (Sequence Number), rack ID (Rack ID), sample type (Type), and date (Date). The status indicates the progress in measuring analysis items requested for a sample. Here, display of the status with a mark improves the visibility. For example, a mark 311 indicates that measurement of all analysis items requested for the sample ended with no abnormality, and a mark 312 indicates that the measurement has been interrupted abnormally. The sample number indicates a number for uniquely identifies a sample, and the rack ID indicates the ID of the rack on which the sample tubes are loaded. The sample type indicates the type of sample, for example, serum, urine, cerebrospinal fluid, or the like. The date displays the date and time when the measurement ended. Note that the items displayed as the sample information 301 of the samples in Fig. 3 are merely examples, and the sample information is not limited thereto.

Analysis item information 302 requested for a sample selected in the sample information 301 is displayed on the top right side of the measurement result display screen 300. In Fig. 3, an example in which the sample of sample number 000002 has been selected is illustrated. In this example, four analysis items have been requested for the sample number 000002. The analysis item information 302 includes analysis item (Test), measurement type (Unit), result (Result), alarm (Alarm), module (Module), and status (Status). The analysis item specifies an analysis item requested for the sample, and the measurement type indicates the type of measurement performed for the analysis item. "Abs" shown in the table indicates the absorbance of a reaction solution of a sample and a reagent being measured. The result displays a result of measurement, and the alarm displays the details of an abnormality in measurement when an alarm is triggered due to the abnormality. "S.Short" shown in the table is an alarm triggered when an abnormality in aspiration occurs in the sample dispensing mechanism. The module displays information for specifying an analyzing unit when there are multiple analyzing units. The status indicates progress information about measurement of each analysis item. Use of marks in the same manner as the sample information 301 increases the visibility. A mark 321 indicates that measurement of a corresponding analysis item ended with no abnormality, a mark 322 indicates that the measurement has been interrupted abnormally, and a mark 323 indicates that the measurement of the sample ended without dispensing the sample.

Sample status information 303 obtained from analysis of the captured image of the sample tubes 105 for the sample selected in the sample information 301 is displayed on the bottom right side of the measurement result display screen 300. As described above, the sample status information 303 displays information about the amount, color, and presence or absence of froth of the sample using icons.

Note that screen display may be different from the arrangement illustrated in Fig. 3 as long as the sample information 301, the analysis item information 302, and the sample status information 303 are displayed on the same screen.

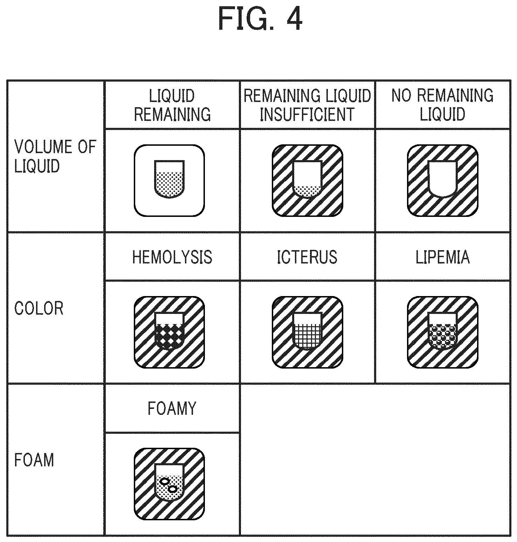

Fig. 4 illustrates examples of icons representing the remaining amount, color, and the presence or absence of froth. Each icon includes a background portion and a graphic portion. The background portion indicates whether the analysis result represented by the icon is normal or abnormal, and the graphic portion indicates the remaining amount, color, or presence or absence of froth, that is, the details of the analysis result. Thus, when the user first perceives the background portion of an icon, the user can determine whether an abnormality has occurred in the sample at a glance. Here, a white background represents normality, while a hatching background represents abnormality. Normality and abnormality may be distinguished by color in addition to a pattern, or a combination of both. The user can ascertain the details of an abnormality by checking the graphic portion of the icon representing the abnormality.

As icons representing amounts of a sample, for example, three icons representing a case in which there is a sufficient remaining amount (liquid remaining), a case in which the amount may be insufficient for the measurement of the requested analysis item (remaining liquid insufficient), and a case in which the liquid volume is equal to or less than a certain level (no remaining liquid) are prepared. In the example of Fig. 4, graphics of sample tubes with different liquid levels are used as the graphic portion.

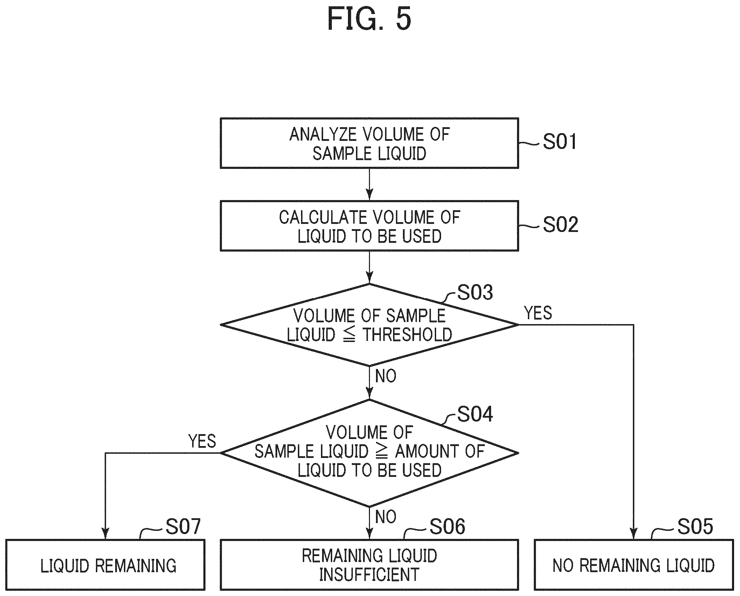

Fig. 5 is a flowchart for selecting an icon representing the amount of a sample. The computer 103 implements the flowchart. First, the computer 103 analyzes the liquid volume of the sample contained in the sample tube from an image of the sample tube 105 (S01). Next, the amount of samples to be used for measuring all the analysis items requested for the sample is calculated (S02). If the liquid volume of the sample is equal to or less than a threshold, "no remaining liquid" is selected (S05). The threshold can be set to a minimum dispensing amount set in the automatic analyzer. If the remaining amount exceeds the threshold, the liquid volume of the sample is compared with the amount of the sample to be used for the measurement (S04). If the liquid volume of the sample is less than the amount of the sample to be used, "remaining liquid insufficient" is selected (S06), and if the liquid volume of the sample is equal to or greater than the amount of the sample to be used, "liquid remaining" is selected (S07).

Although Fig. 5 illustrates an example in which the remaining amount is determined based on the amount of the sample to be used, icons representing the remaining amounts determined based on the height from the bottom of the sample tube 105 to the liquid level may be set.

Returning to the description of Fig. 4, the icons representing color will be described. Fig. 4 illustrates examples of the icons representing color abnormalities when the sample is serum. When the sample is serum, the normal sample appears transparent in color. Meanwhile, the sample appears red when hemolysis is observed, close to yellow when icterus is observed, and white when chyle is observed. Thus, different abnormality icons are set for these three color abnormalities of hemolysis, icterus, and chyle, respectively. Since all the icons represent abnormalities, the background portions are displayed in hatching, and the color abnormalities are displayed in patterns, colors, or combinations of both in the graphic portions. When it is determined that both hemolysis and icterus are observed in a sample, both a hemolysis icon and an icterus icon are displayed.

An icon representing a color abnormality may be displayed in phase by setting a threshold. In this case, a case in which an intensive abnormality (e.g., hemolysis) is observed and a case in which a slight abnormality is observed can be visually distinguished by using icons. For example, when a color abnormality is represented by color of the graphic portion, for example, a light color and a dark color can be divided to indicate different degrees of the abnormality. Alternatively, when the degree of an abnormality is displayed through a pattern or color in the background portion rather than in the graphic portion, the user can easily recognize the status visually.

The icon representing the presence or absence of froth will be described. The icon representing the presence or absence of froth is displayed only when froth are present. Since the sample dispensing mechanism 206 detects the liquid level by using the liquid level detecting sensor, froth forming on the sample surface may be mistakenly detected as the liquid level, which could prevent the sample from being aspirated. For this reason, it is possible to determine whether the sample was truly absent or whether the detection error was caused due to froth by checking the presence or absence of froth. In the example of Fig. 4, graphic of a sample tube with froth in the sample is used as the graphic portion.

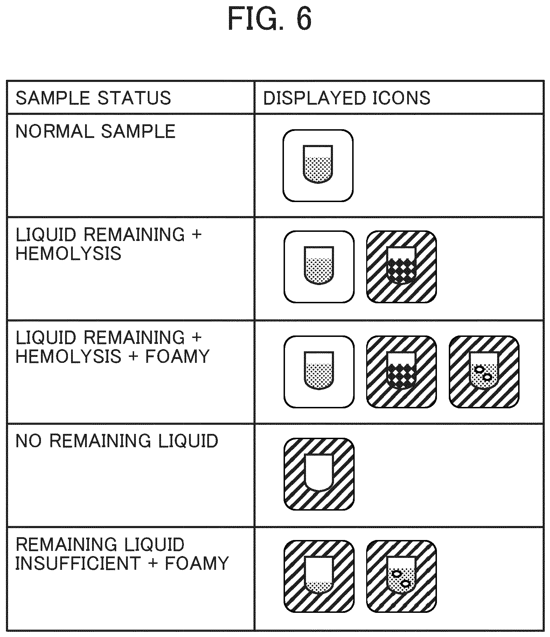

Sample statuses are displayed in the sample status information 303 on the measurement result display screen 300 by using the one or more icons illustrated in Fig. **4****.** When multiple icons are displayed, the user interprets the sample status based on the combinations of the icons. In the example of Fig. 3, the sample number 000002 indicates that there are a liquid remaining and froth. Fig. 6 is a table of the correspondence between the sample statuses and the displayed icons. A normal sample in a remaining amount with no abnormalities is expressed by a single icon with a liquid remaining as illustrated in the top line. On the other hand, in the case of no remaining liquid (the liquid volume of the sample being equal to or less than the threshold), it is not possible to perform measurement even if the sample has a color abnormality or froth, and thus only an icon with no remaining liquid may be displayed.

By displaying the sample status information 303 with icons as described above, the user can recognize the principal status of the sample only by selecting the sample on the measurement result display screen 300. In addition, by arranging the sample status information 303 on the same screen as the sample information 301 and the analysis item information 302, the status of the sample that can be read from the captured image of the sample tube 105 and the alarm information displayed as the measurement result can be recognized together. Modified examples of the present embodiment will be described below.

### (Modified Example 1)

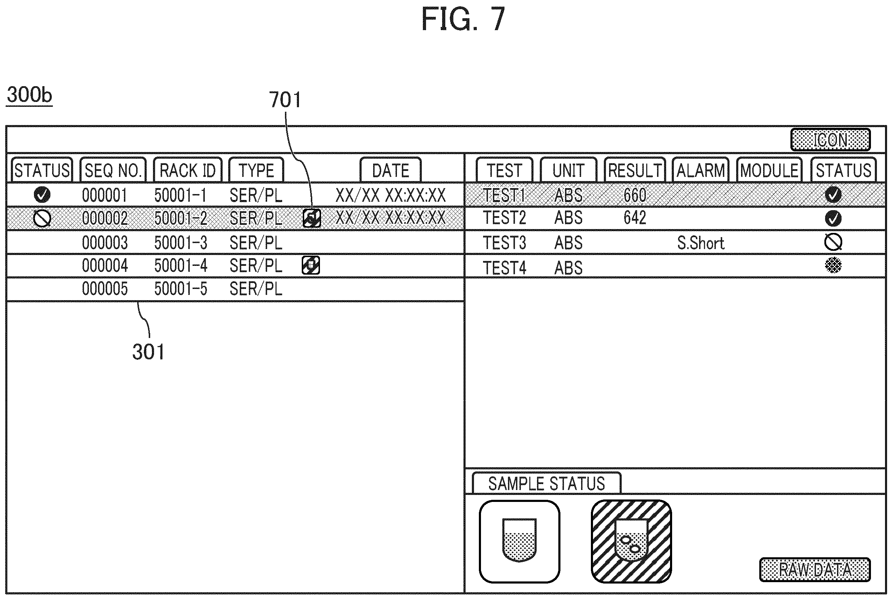

Fig. 7 illustrates another example of the measurement result display screen. On the measurement result display screen 300 illustrated in Fig. 3, the sample status information 303 is invisible unless any sample is selected from the sample information 301. On a measurement result display screen 300b illustrated in Fig. 7, when an abnormality is detected in a sample, an abnormality icon 701 is displayed in the sample information 301. The abnormality icon 701 is an icon representing a typical abnormality among abnormalities analyzed in the sample. Thus, the presence or absence of the abnormality can be recognized without selecting the sample. When multiple abnormalities are found in the sample status, the order of priority of the icons displayed in the sample information 301 may be determined by the analyzer or determined by the user.

### (Modified Example 2)

As illustrated in Fig. 6, the sample status is displayed by combining multiple icons. The display of icons is designed to help users recognize abnormalities at a glance, so displaying too many icons may make the user feel complicated. In addition, the information to be displayed may vary depending on the user.

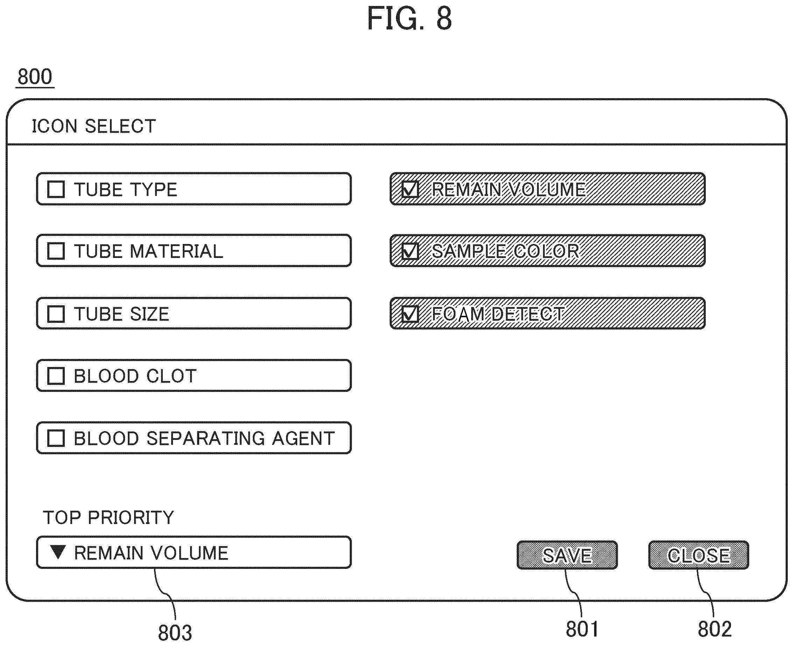

In the modified example 2, the sample status displayed with icons can be selected by the user. For this reason, an icon button 304 is arranged on the measurement result display screen 300 (see Fig. 3). When the user presses the icon button 304, an icon selection screen for selecting icons to be displayed on the measurement result display screen 300 is displayed. Fig. 8 illustrates an example of an icon selection screen 800.

The icon selection screen 800 displays selectable sample statuses. Fig. 8 illustrates an example in which a tube shape (Tube Type), a tube material (Tube Material), a tube size (Tube Size), the presence or absence of a clot (Blood Clot), the presence or absence of a separating agent (Blood Separating Agent), a liquid volume (Remain Volume), a color abnormality (Sample Color), and froth (Foam Detect) can be selected. Information that can be selected here may be any information as long as the information can be analyzed from an image of a sample tube.

The user selects the item to be displayed as an icon by checking the checkbox, and then presses a save button 801 to change the display of the icon. Then, when the user presses a close button 802, the icon selection screen 800 is closed.

When the user selects the checkbox and the setting is changed, the color of the save button 801 may be changed. Accordingly, the user can be informed that the change is unconfirmed. In addition, a function of displaying a popup indicating that no change is reflected when the close button 802 is pressed without any change being confirmed to prevent erroneous operations may be provided.

In addition, an upper limit of the number of icons to be displayed may be set as a setting of the analyzer. In that case, a function of informing the user that no more settings can be performed when the user presses the save button 801 while the number of items exceeding the upper limit is checked may be provided.

Furthermore, the icon selection screen 800 includes a priority selection button 803. In the modified example 1, when an abnormality is detected in a sample, the abnormality icon 701 representing a typical sample abnormality is displayed in the sample information 301 (see Fig. 7). Although the analyzer determines the order of priority of the icons displayed as the abnormality icon 701 as default, the user can change the order of priority of the icons displayed as the abnormality icons 701 by using the priority selection button 803.

When the user presses the priority selection button 803, a list of the abnormality icons 701 to be displayed is displayed. When the user selects the item that the user wishes to display as top priority from the list, the item is changed as the top priority item. Thereby, the user can easily ascertain desired information. The priority selection button 803 not only can change the top priority item, but also can sort the order of priority of the abnormality icons 701.

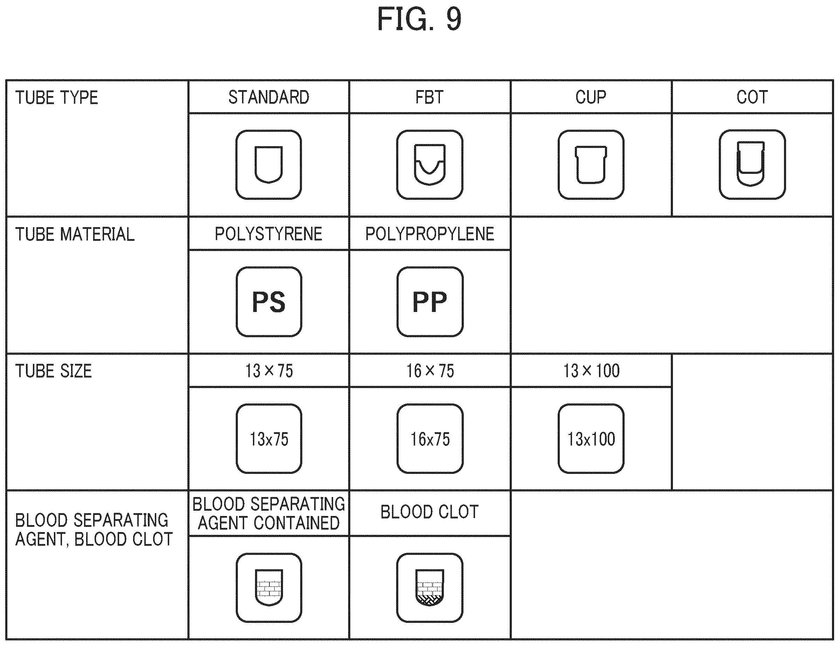

Fig. 9 illustrates examples of icons representing the tube shape, tube material, tube size, and presence or absence of a separating agent or clot. Since all the icons do not represent abnormalities, the background portions of the icons are white indicating no abnormalities.

In the tube shape, the shapes of the sample tubes such as test tube, false bottom test tube (FBT), cup, and cup-on-tube are displayed.

In the tube material, the materials of the sample tubes such as polystyrene (PS) and polypropylene (PP) are displayed. The tube material can be determined based on the color of the tube. For example, the materials can be determined since transparent polypropylene is slightly cloudy and polystyrene is transparent. Because transparency of a sample tube is information necessary for identifying the color of the sample, the transparency of the tube may be displayed, rather than the tube material.

In the tube size, the diameter and height of the sample tube are displayed. Sizes are not displayed for a single-sized cup or the like.

In the presence or absence of a separating agent or clot, an icon representing the presence of a separating agent is displayed if a separating agent is present, and an icon representing the presence of a clot is displayed if a clot is present.

### (Modified Example 3)

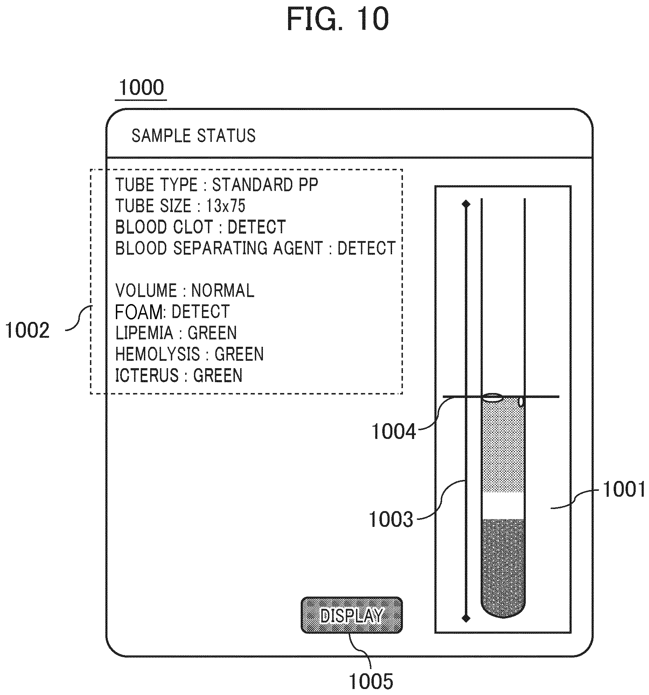

In the modified example 3, the user can check the sample status displayed with icons through a real image. To this end, an image display button 305 is arranged on the measurement result display screen 300 (see Fig. 3). When the user presses the image display button 305, the user can check the captured image of the sample tube 105 from a raw data display screen. This configuration enables the user to check the real color of the sample, for example, if there is a color abnormality. Fig. 10 is an example of a raw data display screen 1000.

The raw data display screen 1000 displays image data 1001 of a captured image and tube information 1002. In addition, the image data 1001 displays a bar 1003 indicating a tube height and a line 1004 indicating a liquid level analyzed by the computer 103 in a superimposing manner. The bar 1003 indicating the tube height may be displayed to the outside of the image as long as the height is within a range that allows the bottom of the tube in the image to be compared with the top position. Note that the image data 1001 is illustrated as a schematic diagram in the figure.

When the line 1004 indicating the liquid level is displayed, the image near the liquid level becomes difficult to check. In that case, the presence or absence of froth becomes difficult to assess visually, so the presence or absence of the display of the line 1004 indicating the liquid level may be switched. Thus, a display button 1005 is designed to switch the presence or absence of the display of the bar 1003 indicating the tube height and the line 1004 indicating the liquid level. It may be designed to hide the display of the bar 1003 indicating the tube height or the line 1004 indicating the liquid level by pressing the bar or the line.

Note that the present invention is not limited only to the examples described above, and includes various modified examples. For example, the above-described embodiment and modified examples are described in detail to make the present invention easier to understand, and are not limited to necessarily include all the described configurations. In addition, part of the configuration of certain embodiment and modified examples can be replaced with the configuration of another embodiment and modified example, and the configuration of another embodiment and modified example can be added to the configuration of a certain embodiment and modified example. In addition, addition, deletion, and substitution of another configuration can be performed to part of the configuration of each embodiment and modified example.

### Reference Signs List

- 101:: analyzing unit
- 102:: control unit
- 103:: computer
- 104:: display unit
- 105:: sample tube
- 106:: rack
- 107:: transport unit
- 108:: camera
- 109:: barcode reader
- 201:: reaction disk
- 202:: reaction container
- 203:: reagent disk
- 203a:: aspiration hole
- 204:: first reagent dispensing mechanism
- 205:: second reagent dispensing mechanism
- 206:: sample dispensing mechanism
- 207:: sample aspirating position
- 208a:: light source
- 208b:: spectrophotometer
- 300, 300b:: measurement result display screen
- 301:: sample information
- 302:: analysis item information
- 303:: sample status information
- 304:: icon button
- 305:: image display button
- 311, 312, 321, 322, 323:: mark
- 701:: abnormality icon
- 800:: icon selection screen
- 801:: save button
- 802:: close button
- 803:: priority selection button
- 1000:: raw data display screen
- 1001:: image data
- 1002:: tube information
- 1003:: bar
- 1004:: line
- 1005:: display button

## Claims

1. An automatic analyzer comprising:
an analyzing unit that makes a measurement of a sample contained in a sample tube;
a display unit that displays a result of measurement by the analyzing unit;
a transport unit that transports the sample tube to the analyzing unit;
a camera that takes an image of the sample tube transported to the analyzing unit; and
a control unit that analyzes the image of the sample tube which has been taken by the camera and, regarding the sample for which the measurement result is displayed, makes the display unit additionally display one or more icons based on an analysis result of the image of the sample tube containing the sample.

2. The automatic analyzer according to Claim 1, wherein
a measurement result display screen displayed on the display unit displays sample information on a sample measured by the analyzing unit, information on an analysis item requested for the sample, and sample status information based on the analysis result of the image of the sample tube containing the sample, and
the sample status information is shown by the one or more icons.

3. The automatic analyzer according to Claim 2, wherein a type of the icon displayed as the sample status information on the measurement result display screen can be selected.

4. The automatic analyzer according to Claim 2, wherein when, by analyzing an image of a sample tube containing a first sample, an abnormality is detected in a sample status of the first sample, the control unit displays an abnormality icon showing a typical abnormality in the sample status of the first sample, in addition to the sample information on the measurement result display screen.

5. The automatic analyzer according to Claim 4, wherein an order of priority of the icons displayed as the abnormality icons can be adjusted.

6. The automatic analyzer according to Claim 2, wherein, regarding the sample for which the sample status information has been displayed on the measurement result display screen, the control unit makes the display unit display an image of the sample tube containing the sample.

7. The automatic analyzer according to Claim 6, wherein, regarding the sample for which the sample status information has been displayed on the measurement result display screen, the control unit makes the display unit display a bar indicating a height of the sample tube and a line indicating a liquid level which are superimposed on the image of the sample tube containing the sample.

8. The automatic analyzer according to Claim 1, wherein the icon has a background portion and a graphic portion, and
the background portion represents whether or not the sample has an abnormality and the graphic portion represents the analysis result of the image of the sample tube.
